# EUROPEAN PATENT SPECIFICATION

(11) **EP 4 274 086 B1**
(45) Date of publication and mention of the grant of the patent: **10.12.2025**
(21) Application number: 22172131.9
(22) Date of filing: 06.05.2022
(51) Int. Cl.: H02P 9/16, H02P 9/14, H02P 9/10

(54) **FIELD WINDING CIRCUIT FOR AN ALTERNATOR, ALTERNATOR COMPRISING THE SAME, AND ASSOCIATED METHODS**
FELDWICKLUNGSSCHALTUNG FÜR EINEN WECHSELSTROMGENERATOR, WECHSELSTROMGENERATOR DAMIT UND ZUGEHÖRIGE VERFAHREN
CIRCUIT D'ENROULEMENT DE CHAMP POUR ALTERNATEUR ET ALTERNATEUR LE COMPRENANT, ET PROCÉDÉS ASSOCIÉS

(43) Date of publication of application: 08.11.2023
(73) Proprietor: Volvo Truck Corporation, 405 08 Göteborg (SE)
(72) Inventor: KRISHNAKUMAR, Niveditha, 600078 CHENNAI (IN); BASKARAN, Ranjith Kumar, 560043 BANGALORE (IN)
(74) Representative: Lavoix

(56) References cited:
- CN-A- 101 951 074
- US-B1- 6 218 814

## Description

### TECHNICAL FIELD

The present disclosure relates to alternators for use in motor vehicles.

The invention is, for example, applicable to the field of industrial vehicles, especially heavy-duty and medium-duty vehicles, such as trucks, buses, construction equipment and the like.

### BACKGROUND

Alternators are commonly used in motor vehicles to generate electric power when the vehicle is moving or when an internal engine of the vehicle is running. The electric power generated by the alternator can be used to charge an electric battery of the vehicle.

Alternators usually comprise a rotor, a stator, one or more magnets affixed to either the rotor or the stator, and a stator winding circuit capable of generating a voltage when a magnetic field created by the magnet(s) or electromagnets (field/rotor winding circuit) is moving relative to the stator/armature winding circuit.

In many automotive applications, the output voltage and the output electric power generated by the alternator are regulated using specific circuitry such as voltage regulators, power converters, or the like, so that the output power can match the electric power required by the electric loads connected to the alternator.

There are two ways to generate the required output from the alternator. First method is by increasing the number of turns in the field circuit winding and the second method is by increasing the current given to the field circuit winding. Generally, the second method is opted as changing the number of turns for the field circuit winding will not be possible once a design is frozen.

CN101951074A or US-6218814-B1 describe, for example, an alternator with a stator comprising multiple windings, which can be selected depending on the rotation speed of the alternator or voltage generated by the alternator.

But, this patent provides a solution to effectively use the first method.

### SUMMARY

An aspect of the invention relates to a winding circuit for an alternator of a vehicle, the field winding circuit being according to claim 1.

In some embodiments, the first switch is connected between a first output terminal of the electronic voltage regulator and a first terminal of the first winding portion, wherein the second switch is connected between a second output terminal of the electronic voltage regulator and a second terminal of the first winding portion, the second terminal of the first winding portion being connected to a first terminal of the second winding portion and wherein the third switch is connected between a third output terminal of the electronic voltage regulator and a second terminal of the second winding portion.

In some embodiments, the first switch, the second switch and the third switch are electronic switches, for example semiconductor switches, such as transistors.

In some embodiments, the electronic controller is configured to determine required output power using a sensor connected to the electronic controller

In some embodiments, the electronic controller is configured to estimate the required output power by automatically querying the state of the electric load using a communications link.

In some embodiments, the first winding portion and a second winding portion are connected together through an electrical midpoint of the electromagnetic coil.

Another aspect of the invention relates to an alternator comprises a rotor, a stator, and at least one winding circuit as described above.

Another aspect of the invention relates to a motor vehicle comprising an alternator as described above.

The field windings may be split into more windings portions with the same or the different number of turns or coil sizes.

In some embodiments, the motor vehicle is an industrial vehicle, for example a heavy-duty vehicle or a medium-duty vehicle, such as trucks, buses, or construction equipment, or Marine Engines, or Diesel Generator sets.

Another aspect of the invention relates to a method for controlling a field winding circuit for an alternator, comprising an electromagnetic coil including a first field winding portion and a second winding portion electrically connected in series, wherein the winding circuit comprises a first switch, a second switch and a third switch configured to selectively connect one or both of the first and second winding portions to output terminals of the Electronic Voltage regulator, wherein the method comprises, by an electronic controller of the winding circuit:
- determining the output electric power required by an electrical load connected to the output terminals of the Electronic Voltage regulator,
- comparing the required output electric power to a threshold value,
- connecting only one of the first and second winding portions to the output terminals if the required output electric power is below the threshold value and connect both the first and second winding portions to the output terminals if the required output electric power is higher than the threshold value.

### BRIEF DESCRIPTION OF THE DRAWINGS

The invention will be understood upon reading the following description, provided solely as an illustrative example, and made in reference to the appended drawings, in which:
- Fig. 1 is a simplified diagram of an industrial vehicle comprising an alternator according to embodiments of the invention,
- Fig. 2 is a simplified electrical diagram of an alternator according to embodiments of the invention,
- Fig. 3 is a block diagram of an exemplary method of operation of the winding circuit of Fig. 2.

### DETAILED DESCRIPTION OF SOME EMBODIMENTS

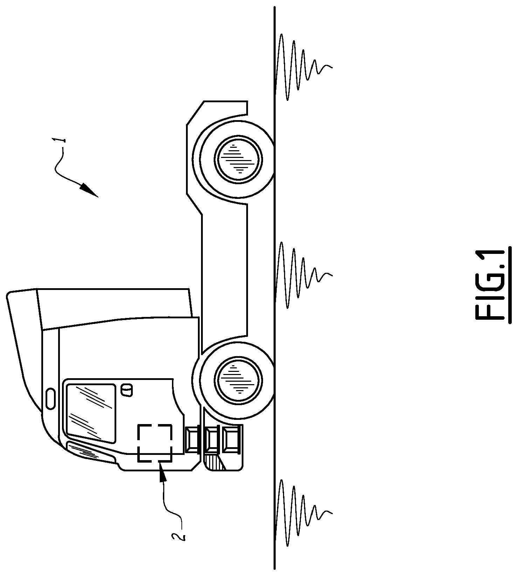

Figure 1 illustrates a motor vehicle 1 comprising at least one alternator 2.

In preferred embodiments, the vehicle 1 is a heavy-duty or medium-duty vehicle.

In other embodiments, the vehicle 1 can be any industrial vehicle, preferably a wheeled industrial vehicle, such as a tractor, or a bus, or a dump-truck, or a military ground vehicle, or a heavy-duty construction vehicle such as a loader, a bulldozer, an excavator, a compactor, a scraper, or any equivalent vehicle.

In some embodiments, the alternator 2 can be used independently of any vehicle 1, for example in internal combustion engines such as marine engines or diesel generator sets. The description that will follow can be transposed to these embodiments, the reference to a vehicle 1 being optional.

The vehicle 1 comprises an engine, or motor, such as an internal combustion engine or an electric traction motor.

The alternator 2 is configured to generate electric power when the vehicle 1 is moving or when an internal engine of the vehicle 1 is running. For example, the alternator 2 is mechanically coupled to one or more wheels of the vehicle 1 or to an engine of the vehicle 1 (e.g. to an output shaft of the engine).

The alternator 2 may be used to supply electric power to one or more electric loads of the vehicle 1, for example to charge an electric battery of the vehicle.

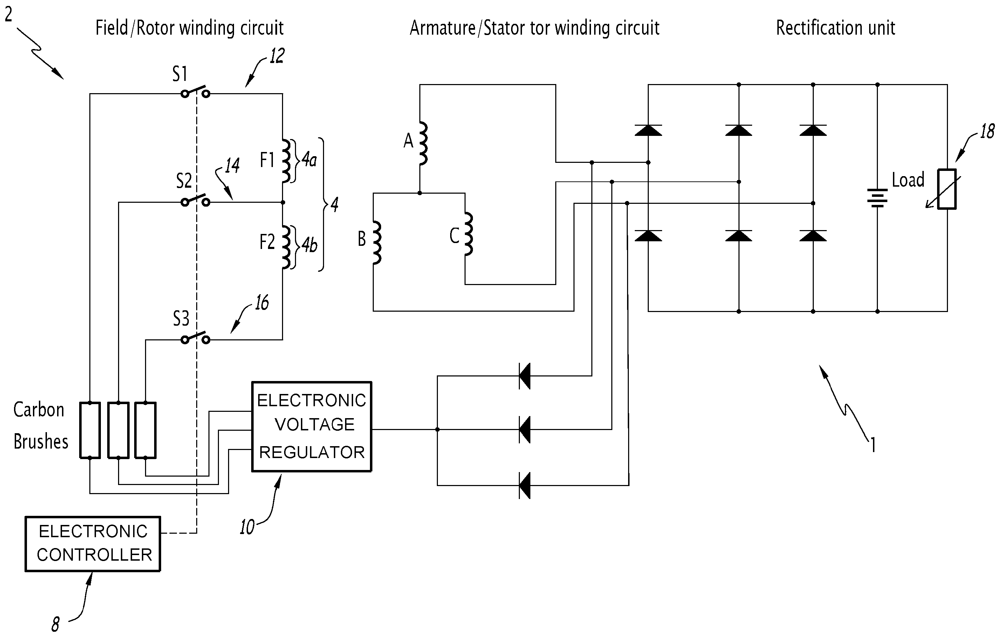

An exemplary electric load 18 is illustrated on the diagram of figure 2.

In many embodiments, the alternator 2 comprises a rotor and a stator. The alternator 2 may also comprise at least one magnet. The rotor of the alternator 2 may be a brushed or a brushless alternator.

In many examples, either the rotor is mechanically coupled to a wheel of the vehicle 1 or to the engine of the vehicle 1. The magnets, whenever they are present, are attached to either the rotor or the stator. The magnets may be permanent magnets and/or electromagnets.

The alternator 2 comprises a winding circuit.

The winding circuit in the stator can produce a constant output voltage with required current. The winding circuit in the rotor is excited by providing a DC current, which will create a magnetic field in the rotor. When the rotor rotates, this field of force cuts through the three phases of the stationary stator winding (noted as A, B and C in the example of figure 2) and during a complete 360° rotation induces sinusoidal waves in each phase (the exact number of sinusoidal waves depends on the number of pole pairs). The generated current is divided into primary current (Output current) and excitation current (input to the field coil via regulator circuit). After rectification, the primary current flows as operating current output terminal to the battery and to the loads.

Figure 2 schematically illustrates an example of a winding circuit for the alternator 2.

To simplify the disclosure of the invention, known elements of the alternator 2 such as the rotor and the stator are not illustrated on figure 2.

The winding circuit comprises an electromagnetic coil 4 (or winding) including a first field winding portion 4a (having an inductance F1) and a second field winding portion 4b (having an inductance F2) electrically connected in series. In other words, the electromagnetic coil 4 is subdivided into the two winding portions 4a and 4b.

In preferred embodiments, the first field winding portion 4a and the second field winding portion 4b can be same or different based on the design that is requested. For example, the first field winding portion 4a and the second field winding portion 4b have the same/different inductance and resistance value and/or the same/different length and/or the same/different coil diameter and/or the same/different number of individual coils.

In the illustrated example, the first field winding portion 4a and a second field winding portion 4b are connected together through an electrical node 6 of the electromagnetic coil.

The winding circuit comprises a first switch S1, a second switch S2 and a third switch S3 configured to selectively connect one or both of the first and second winding portions to output terminals of the winding circuit.

Each switch S1, S2 and S3 can be reversibly switched between an open state and a closed state.

In preferred embodiments, the first switch S1, the second switch S2 and the third switch S3 are electronic switches, for example semiconductor switches, such as transistors (e.g. MOSFETs, or Insulated Gate Bipolar Transistors or any suitable power switch).

The alternator 2 comprises of a field winding circuit, a stator winding circuit, an electronic voltage regulator and an electronic controller 8 capable of operating the switches S1, S2 and S3. For example, outputs of the electronic controller 8 are connected to the respective control electrodes (such as transistor gate electrodes) of the switches S1, S2 and S3.

In this disclosure, the expression "electronic controller" refers not only to electronic controller devices such as a processor, or a microprocessor, or a microcontroller, but also to other electronic devices and circuits such as programmable logic controllers (PLC), application-specific integrated circuits (ASIC), field-programmable gate array (FGPA) circuits, digital signal processing (DSP) circuits, graphical processing units (GPU), logic circuits, analog circuitry, equivalents thereof, and any other circuit or processor capable of executing the functions described herein.

The field winding circuit comprise output terminals configured to be electrically connected to at least one electronic voltage regulator 10. The electrical loads may be connected to the electronic voltage regulator 10. In some embodiments, the functions of the electronic controller 8 can also be integrated in the electronic Voltage regulator 10.

In the illustrated example, the electronic voltage regulator 10 is capable of regulating the output voltage generated by the stator winding circuit of the alternator 2 by controlling the input provided to the electromagnetic coil 4. For example, the voltage generator can distribute the output power to one or more electrical loads 18 through a power distribution bus (e.g. through connectors such as a busbar).

In other embodiments, the load 18 may be, for example, an electricity storage system such as a battery.

The exemplary system 3 depicted on figure 2 also comprises a stator winding circuit and a rectification unit (rectification circuit) comprising diode rectifiers. The three phases of the stator winding circuit may optionally be connected to the electronic voltage regulator 10, eventually with protection diodes as in the illustrated example

In the illustrated example, the first switch S1 is connected between a first output terminal of the electronic voltage regulator 10 and a first terminal 12 of the first winding portion 4a.

The second switch S2 is connected between a second output terminal of the electronic voltage regulator 10 and a second terminal 14 of the first winding portion 4a.

In this example, the second terminal 14 of the first field winding portion 4a is connected to a first terminal of the second winding portion (for example through the node 6).

The third switch S3 is connected between a third output terminal of the electronic voltage regulator and a second terminal 16 of the second winding portion 4b.

In some embodiments, as illustrated on the example of figure 2, optional carbon brushes may be connected between the switches S1, S2, S3 and the corresponding terminal of the electronic voltage regulator 10.

In this example, the switches S1, S2 and S3 can be controlled to place the winding circuit into one of three possible configurations.

In a first configuration, the first field winding portion 4a is connected to the output terminals of the electronic voltage regulator 10 and the second field winding portion 4b is disconnected from the output terminals of the electronic voltage regulator by closing the first switch S1 and the second switch S2 and keeping the third switch S3.

In a second configuration, the second field winding portion 4b is connected to the output terminals of the electronic voltage regulator 10 and the first field winding portion 4a is disconnected from the output terminals of the electronic voltage regulator by closing the second switch S2 and the third switch S3 and keeping the first switch S1 is open.

In a third configuration, both the first field winding portion 4a and the second field winding portion 4b are connected to the output terminals of the electronic voltage regulator 10 by closing the second switch S1 and the third switch S3 and keeping the first switch S2 is open.

Thus, in both the first configuration and the second configuration, only part of the electromagnetic coil 4 is connected to the electronic voltage regulator 10. The output power generated by the stator winding circuit (and the alternator 2) in the above mentioned configuration (1&2) is lower than when both the first field winding portion 4a and the second field winding portion 4b are connected.

In accordance with embodiments of the invention, the electronic controller 8 is configured to:
- determine the output electric power required by the electrical load 18 connected (directly or indirectly) to the output terminals of the stator winding circuit,
- compare the required output electric power to a threshold value,
- connect only one of the first or second field winding portions 4a/4b to the output terminals of the electronic voltage regulator 10 if the required output electric power is below the threshold value and connect both the first and second winding portions to the output terminals if the required output electric power is higher than the threshold value.

A technical advantage of this invention is the load dependency on the electromagnetic coil 4 can be reduced. If one of the coils is damaged, the other coil(s) can always support for power generation.

In some embodiments, the electronic controller 8 is configured to determine required output power using a sensor connected to the electronic controller.

In some other embodiments, the electronic controller 8 is configured to estimate the required output power by automatically querying the state of the electric load 18 using a communications link (not illustrated).

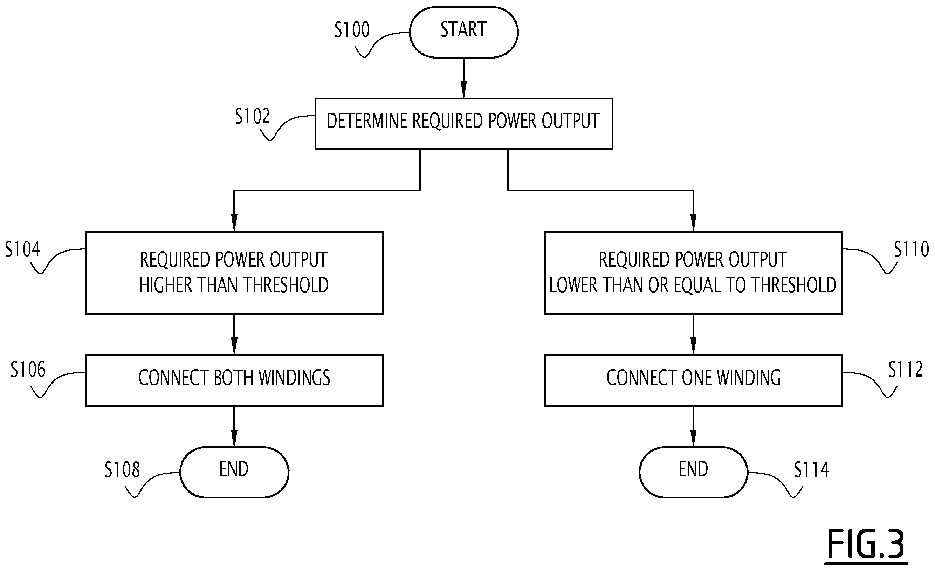

An example of operation is now described in reference to figure 3.

The method begins at block S100, for example in response to an action initiated by a user (such as starting the vehicle 1) or in response to a query by another electronic controller coupled to the electric load 18.

At block S102, the electronic controller 8 determines the output electric power required by the electrical load 18.

During a subsequent step, the determined output power is compared to a threshold value, e.g. a threshold value stored in a memory of the electronic controller 8.

If the required output power is found to be above the threshold value (e.g. higher than the threshold value - block S104), then in response, the electronic controller 8 automatically connects both the first field winding portion 4a and the second field winding portion 4b of the electromagnetic coil 4 to the output terminals of the electronic voltage controller 10 (block S106) in order to maximize the output power of the winding circuit (and of the alternator 2). For example, the electronic controller 8 closes the switches S1 and S3 by sending suitable control signal to their respective control electrodes. The first prong of the method ends at block S108.

If the required output power is found to be below the threshold value (e.g. equal to or lower than the threshold value - block S110), then in response, the electronic controller 8 automatically connects only one of the first field winding portion 4a or the second field winding portion 4b of the electromagnetic coil 4 to the output terminals of the electronic voltage controller 10 (block S112) in order to reduce the output power of the winding circuit (and of the alternator 2). For example, the electronic controller 8 closes the second switch S2 and only one of either the first switch S1 or the third switch S3, by sending suitable control signal to their respective control electrodes. The second prong of the method ends at block S114.

In alternative embodiments, the method steps described above could be executed in a different order. One or more method steps could be omitted or replaced by equivalent steps. Some method steps could be combined or dissociated into different method steps.

The disclosed exemplary embodiment is not intended to be limiting and does not prevent other methods steps to be executed without departing from the scope of the claimed subject matter.

Other embodiments are possible.

For example, the field windings may be split into more windings portions with the same or the different number of turns or coil sizes.

The stator winding circuit can be connected in a star configuration (as in the example of figure 2) or in a delta configuration.

The method described above can be used either in brushed alternators or in brushless alternators. When used in a brushed alternator, the number of brushes can be chosen (e.g., increased) according to the number of windings portions.

The method is not restricted to an alternator in a vehicle but can also be used for marine generators or generator sets (e.g., gensets) or integrated starter generators.

## Claims

1. A field winding circuit for an alternator (2) of a vehicle (1), the field winding circuit comprising an electromagnetic coil (4) including a first field winding portion (4a) and a second field winding portion (4b) electrically connected in series,
wherein the field winding circuit comprises a first switch (S1), a second switch (S2) and a third switch (S3) configured to selectively connect one or both of the first and second winding portions to output terminals of the field winding circuit,
wherein the output terminals are configured to be electrically connected to at least one electronic voltage regulator (10) of the alternator (2),
**characterized in that** the field winding circuit comprises an electronic controller (8) configured to:
- determine the output electric power required by an electrical load (18) of the vehicle (1), the electrical load being connected to the electronic voltage regulator (10),
- compare the required output electric power to a threshold value,
- connect only one of the first and second winding portions to the output terminals if the required output electric power is below the threshold value and connect both the first and second winding portions to the output terminals if the required output electric power is higher than the threshold value.

2. The field winding circuit of claim 1, wherein the first switch (S1) is connected between a first output terminal of the electronic voltage regulator and a first terminal (12) of the first winding portion (4a), wherein the second switch (S2) is connected between a second output terminal (14) of the electronic voltage regulator and a second terminal of the first winding portion, the second terminal of the first winding portion being connected to a first terminal of the second winding portion and wherein the third switch (S3) is connected between a third output terminal (16) of the electronic voltage regulator and a second terminal of the second winding portion (4b).

3. The winding circuit of claim 1 or claim 2, wherein the first switch, the second switch and the third switch (S1, S2, S3) are electronic switches, for example semiconductor switches, such as transistors.

4. The winding circuit according to any one of the previous claims, wherein the electronic controller (8) is configured to determine required output power using a sensor connected to the electronic controller.

5. The winding circuit according to any one claims 1 to claim 3, wherein the electronic controller (8) is configured to estimate the required output power by automatically querying the state of the electric load (18) using a communications link.

6. The winding circuit according to any one of the previous claims, wherein the first winding portion and a second winding portion are connected together through an electrical node (6) of the electromagnetic coil.

7. The winding circuit according to any one of the previous claims, wherein the field windings are split into more windings portions with the same or the different number of turns or coil sizes.

8. An alternator (2) comprising a rotor, a stator, and at least one winding circuit according to any one of the previous claims.

9. A motor vehicle (1) comprising an alternator (2) according to the previous claim.

10. The motor vehicle (1) of claim 8, wherein the motor vehicle is an industrial vehicle, for example a heavy-duty vehicle or a medium-duty vehicle, such as trucks, buses, or construction equipment.

11. A method for controlling a field winding circuit for an alternator (2) of a vehicle (1), the field winding circuit comprising an electromagnetic coil (4) including a first field winding portion (4a) and a second field winding portion (4b) electrically connected in series, wherein the field winding circuit comprises a first switch (S1), a second switch (S2) and a third switch (S3) configured to selectively connect one or both of the first and second winding portions to output terminals of the field winding circuit, wherein the output terminals are configured to be electrically connected to at least one electronic voltage regulator (10) of the alternator, wherein the method comprises steps, carried out by an electronic controller (8) of the field winding circuit:
- determining the output electric power required by an electrical load (18) of the vehicle (1), the electrical load being connected to the electronic voltage regulator (S102),
- comparing the required output electric power to a threshold value (S104),
- connecting only one of the first or second winding portions to the output terminals if the required output electric power is below the threshold value and connect both the first and second winding portions to the output terminals if the required output electric power is higher than the threshold value (S104-S112).

## Patentansprüche

1. Feldwicklungsschaltung für einen Wechselstromgenerator (2) eines Fahrzeugs (1), die Feldwicklungsschaltung umfassend eine elektromagnetische Spule (4), die einen ersten Feldwicklungsabschnitt (4a) und einen zweiten Feldwicklungsabschnitt (4b) beinhaltet, die elektrisch in Reihe verbunden sind,
wobei die Feldwicklungsschaltung einen ersten Schalter (S1), einen zweiten Schalter (S2) und einen dritten Schalter (S3) umfasst, die konfiguriert sind, um selektiv einen oder beide von dem ersten und dem zweiten Wicklungsabschnitt mit Ausgangsanschlüssen der Feldwicklungsschaltung zu verbinden,
wobei die Ausgangsanschlüsse konfiguriert sind, um mit mindestens einem elektronischen Spannungsregler (10) des Wechselstromgenerators (2) elektrisch verbunden zu sein, **dadurch gekennzeichnet, dass** die Feldwicklungsschaltung eine elektronische Steuerung (8) umfasst, die zu Folgendem konfiguriert ist:
- Bestimmen der von einer elektrischen Last (18) des Fahrzeugs (1) benötigten elektrischen Ausgangsleistung, wobei die elektrische
Last mit dem elektronischen Spannungsregler (10) verbunden ist,
- Vergleichen der erforderlichen elektrischen Ausgangsleistung mit einem Schwellenwert,
- Verbinden nur eines von dem ersten und dem zweiten Wicklungsabschnitt mit den Ausgangsanschlüssen, wenn die erforderliche elektrische Ausgangsleistung unter dem Schwellenwert ist, und Verbinden sowohl des ersten als auch des zweiten Wicklungsabschnitts mit den Ausgangsanschlüssen, wenn die erforderliche elektrische Ausgangsleistung über dem Schwellenwert ist.

2. Feldwicklungsschaltung nach Anspruch 1, wobei der erste Schalter (S1) zwischen einem ersten Ausgangsanschluss des elektronischen Spannungsreglers und einem ersten Anschluss (12) des ersten Wicklungsabschnitts (4a) verbunden ist, wobei der zweite Schalter (S2) zwischen einem zweiten Ausgangsanschluss (14) des elektronischen Spannungsreglers und einem zweiten Anschluss des ersten Wicklungsabschnitts verbunden ist, der zweite Anschluss des ersten Wicklungsabschnitts mit einem ersten Anschluss des zweiten Wicklungsabschnitts verbunden ist und wobei der dritte Schalter (S3) zwischen einem dritten Ausgangsanschluss (16) des elektronischen Spannungsreglers und einem zweiten Anschluss des zweiten Wicklungsabschnitts (4b) verbunden ist.

3. Wicklungsschaltung nach Anspruch 1 oder Anspruch 2, wobei der erste Schalter, der zweite Schalter und der dritte Schalter (S1, S2, S3) elektronische Schalter sind, zum Beispiel Halbleiterschalter, wie beispielsweise Transistoren.

4. Wicklungsschaltung nach einem der vorherigen Ansprüche, wobei die elektronische Steuerung (8) konfiguriert ist, um die erforderliche Ausgangsleistung unter Verwendung eines mit der elektronischen Steuerung verbundenen Sensors zu bestimmen.

5. Wicklungsschaltung nach einem der Ansprüche 1 bis 3, wobei die elektronische Steuerung (8) konfiguriert ist, um die erforderliche Ausgangsleistung durch automatisches Abfragen des Zustands der elektrischen Last (18) unter Verwendung einer Kommunikationsverbindung zu schätzen.

6. Wicklungsschaltung nach einem der vorherigen Ansprüche, wobei der erste Wicklungsabschnitt und ein zweiter Wicklungsabschnitt über einen elektrischen Knoten (6) der elektromagnetischen Spule miteinander verbunden sind.

7. Wicklungsschaltung nach einem der vorherigen Ansprüche, wobei die Feldwicklungen in mehrere Wicklungsabschnitte mit gleicher oder unterschiedlicher Windungszahl oder Spulengröße unterteilt sind.

8. Wechselstromgenerator (2), umfassend einen Rotor, einen Stator und mindestens eine Wicklungsschaltung nach einem der vorherigen Ansprüche.

9. Kraftfahrzeug (1), umfassend einen Generator (2) nach dem vorherigen Anspruch.

10. Kraftfahrzeug (1) nach Anspruch 8, wobei das Kraftfahrzeug ein Industriefahrzeug ist, zum Beispiel ein Schwerlastfahrzeug oder ein mittelschweres Fahrzeug, wie beispielsweise Lastkraftwagen, Busse oder Baumaschinen.

11. Verfahren zum Steuern einer Feldwicklungsschaltung für einen Wechselstromgenerator (2) eines Fahrzeugs (1), die Feldwicklungsschaltung umfassend eine
elektromagnetische Spule (4), die einen ersten Feldwicklungsabschnitt (4a) und einem zweiten Feldwicklungsabschnitt (4b) beinhaltet, die elektrisch in Reihe verbunden sind, wobei die Feldwicklungsschaltung einen ersten Schalter (S1), einen zweiten Schalter (S2) und einen dritten Schalter (S3) umfasst, die konfiguriert sind, um selektiv einen oder beide von dem ersten und dem zweiten Wicklungsabschnitt mit Ausgangsanschlüssen der Feldwicklungsschaltung zu verbinden, wobei die Ausgangsanschlüsse konfiguriert sind,
um elektrisch mit mindestens einem elektronischen Spannungsregler (10) des Wechselstromgenerator verbunden zu sein, wobei das Verfahren Schritte umfasst, die
durch eine elektronische Steuerung (8) der
Feldwicklungsschaltung durchgeführt werden:
- Bestimmen der elektrischen Ausgangsleistung, die von einer elektrischen Last (18) des Fahrzeugs (1) benötigt wird, wobei die elektrische Last mit dem elektronischen Spannungsregler verbunden ist (S102),
- Vergleichen der erforderlichen elektrischen Ausgangsleistung mit einem Schwellenwert (S104),
- Verbinden nur eines von dem ersten oder dem zweiten Wicklungsabschnitt mit den Ausgangsanschlüssen, wenn die erforderliche elektrische Ausgangsleistung unter dem Schwellenwert ist, und Verbinden sowohl des ersten als auch des zweiten Wicklungsabschnitts mit den Ausgangsanschlüssen, wenn die erforderliche elektrische Ausgangsleistung über dem Schwellenwert ist (S104-S112).

## Revendications

1. Circuit d'enroulement de champ pour un alternateur (2) d'un véhicule (1), le circuit d'enroulement de champ comprenant une bobine électromagnétique (4) comprenant une première partie d'enroulement de champ (4a) et une seconde partie d'enroulement de champ (4b) connectées électriquement en série,
dans lequel le circuit d'enroulement de champ comprend un premier commutateur (S1), un deuxième commutateur (S2) et un troisième commutateur (S3) configurés pour connecter sélectivement l'une ou les deux de la première et de la seconde partie d'enroulement à des bornes de sortie du circuit d'enroulement de champ,
dans lequel les bornes de sortie sont configurées pour être connectées électriquement à au moins un régulateur de tension électronique (10) de l'alternateur (2), **caractérisé en ce que** le circuit d'enroulement de champ comprend un dispositif de commande électronique (8) configuré pour :
- déterminer la puissance électrique de sortie requise par une charge électrique (18) du véhicule (1), la charge électrique étant connectée au régulateur de tension électronique (10),
- comparer la puissance électrique de sortie requise à une valeur seuil,
- connecter seulement l'une des première et seconde parties d'enroulement aux bornes de sortie si la puissance électrique de sortie requise est inférieure à la valeur seuil et connecter à la fois les première et seconde parties d'enroulement aux bornes de sortie si la puissance électrique de sortie requise est supérieure à la valeur seuil.

2. Circuit d'enroulement de champ selon la revendication 1, dans lequel le premier commutateur (S1) est connecté entre une première borne de sortie du régulateur de tension électronique et une première borne (12) de la première partie d'enroulement (4a), dans lequel le deuxième commutateur (S2) est connecté entre une deuxième borne de sortie (14) du régulateur de tension électronique et une seconde borne de la première partie d'enroulement, la seconde borne de la première partie d'enroulement étant connectée à une première borne de la seconde partie d'enroulement et dans lequel le troisième commutateur (S3) est connecté entre une troisième borne de sortie (16) du régulateur de tension électronique et une seconde borne de la seconde partie d'enroulement (4b).

3. Circuit d'enroulement selon la revendication 1 ou la revendication 2, dans lequel le premier commutateur, le deuxième commutateur et le troisième commutateur (S1, S2, S3) sont des commutateurs électroniques, par exemple des commutateurs à semiconducteur, tels que des transistors.

4. Circuit d'enroulement selon l'une quelconque des revendications précédentes, dans lequel le dispositif de commande électronique (8) est configuré pour déterminer la puissance de sortie requise à l'aide d'un capteur connecté au dispositif de commande électronique.

5. Circuit d'enroulement selon l'une quelconque des revendications 1 à 3, dans lequel le dispositif de commande électronique (8) est configuré pour estimer la puissance de sortie requise en interrogeant automatiquement l'état de la charge électrique (18) à l'aide d'une liaison de communication.

6. Circuit d'enroulement selon l'une quelconque des revendications précédentes, dans lequel la première partie d'enroulement et une seconde partie d'enroulement sont connectées ensemble par un nœud électrique (6) de la bobine électromagnétique.

7. Circuit d'enroulement selon l'une quelconque des revendications précédentes, dans lequel les enroulements de champ sont divisés en plusieurs parties d'enroulement avec un nombre de tours ou une taille de bobine identique ou différent.

8. Alternateur (2) comprenant un rotor, un stator et au moins un circuit d'enroulement selon l'une quelconque des revendications précédentes.

9. Véhicule automobile (1) comprenant un alternateur (2) selon la revendication précédente.

10. Véhicule automobile (1) selon la revendication 8, dans lequel le véhicule automobile est un véhicule industriel, par exemple un véhicule utilitaire lourd ou un véhicule utilitaire moyen, tel que des camions, des autobus ou des engins de chantier.

11. Procédé de commande d'un circuit d'enroulement de champ pour un alternateur (2) d'un véhicule (1), le circuit d'enroulement de champ comprenant une bobine électromagnétique (4) comprenant une première partie d'enroulement de champ (4a) et une seconde partie d'enroulement de champ (4b) connectées électriquement en série, dans lequel le circuit d'enroulement de champ comprend un premier commutateur (S1), un deuxième commutateur (S2) et un troisième commutateur (S3) configurés pour connecter sélectivement l'une ou les deux de la première et de la seconde partie d'enroulement à des bornes de sortie du circuit d'enroulement de champ, dans lequel les bornes de sortie sont configurées
pour être connectées électriquement à au moins un régulateur de tension électronique (10) de l' alternateur,
dans lequel le procédé comprend des étapes, réalisées
par un dispositif de commande électronique (8) du circuit d'enroulement de champ :
- détermination de la puissance électrique de sortie requise par une charge électrique (18) du véhicule (1), la charge électrique étant connectée au régulateur de tension électronique (S102),
- comparaison de la puissance électrique de sortie requise à une valeur seuil (S104),
- connexion de seulement l'une des première et seconde parties d'enroulement aux bornes de sortie si la puissance électrique de sortie requise est inférieure à la valeur seuil et connexion à la fois des première et seconde parties d'enroulement aux bornes de sortie si la puissance électrique de sortie requise est supérieure à la valeur seuil (S104-S112).
